# EUROPÄISCHE PATENTSCHRIFT

(11) **EP 0 794 089 B1**
(45) Veröffentlichungstag und Bekanntmachung des Hinweises auf die Patenterteilung: **05.06.2002**
(21) Anmeldenummer: 97101179.6
(22) Anmeldetag: 25.01.1997
(51) Int. Cl.: B60R 16/02

(54) **Bediensystem, insbesondere für Komponenten in einem Kraftfahrzeug**
Remote-control system for vehicle devices
Système de télécommande pour les éléments d'une voiture

(30) Priorität: 07.03.1996 DE 19608869
(43) Veröffentlichungstag der Anmeldung: 10.09.1997
(73) Patentinhaber: DaimlerChrysler AG, 70567 Stuttgart (DE)
(72) Erfinder: Möller, Carsten-Uwe, 73730 Esslingen (DE); Reh, Frank, 70439 Stuttgart (DE)

(56) Entgegenhaltungen:
- EP-A- 0 078 016
- EP-A- 0 686 525
- DE-A- 4 205 875
- GB-A- 2 291 165
- US-A- 5 450 525

## Beschreibung

Die Erfindung betrifft ein Bediensystem nach dem Oberbegriff des Patentanspruchs 1.

Es ist bereits ein gattungsgemäßes Bedienungssystem aus dem Dokument EP 0 686 525 A1 bekannt. Weiterhin ist ein Bedienungssystem, welches eine Sprachbedieneinrichtung und ein Betätigungsmittel umfaßt, aus der EP 0 078 016 B1 bekannt. Dabei werden dem Betätigungsmittel, welches als Tastschalter ausgeführt ist, über die Sprachbedieneinrichtung verschiedene Bedienfunktionen zugewiesen.

Als nachteilig wird hierbei erachtet, daß der Benutzer keine Rückmeldung über den eingestellten Wert und den Wertebereich der zugewiesenen Bedienfunktion erhält.

Aus der DE 36 05 088 C2 ist ein Bediensystem mit einem Betätigungsmittel, welchem durch eine Überhubfunktion verschiedene Bedienfunktionen zugewiesen werden können und welches als Drehsteller ausgeführt ist, bekannt. Das Betätigungsmittel liefert in Abhängigkeit der zugewiesenen Bedienfunktion dem Benutzer verschiedene, programmierbare haptische Rückmeldungen.

Aus der DE 42 05 875 A1 ist ein Bediensystem, insbesondere ein Drehsteller bekannt, bei welchem die Art einer haptischen Rückmeldung ebenfalls frei veränderbar ist.

Gemeinsam ist dem angeführten Stand der Technik, daß dem Betätigungsmittel nur Bedienfunktionen zugewiesen werden können, welche durch ähnliche Verstellfreiheitsgrade, insbesondere durch Drehen oder Drücken, eingestellt werden. Mechanische Stellgrößen zur Bedienung von Spiegeln, Sitzen, usw. werden hingegen nicht durch analoge Drehsteller, sondern durch reine Schaltfunktionen (vor/zurück bzw. links/rechts) aktiviert.

Aufgabe der Erfindung ist es, ein gattungsgemäßes Bediensystem hinsichtlich seiner ergonomischen Eigenschaften zu verbessern.

Diese Aufgabe wird erfindungsgemäß mit den Merkmalen des Anspruchs 1 gelöst, wobei die Merkmale der Unteransprüche vorteilhafte Ausgestaltungen und Weiterbildungen kennzeichnen.

Erfindungsgemäß wird die gestellte Aufgabe dadurch gelöst, daß einem Betätigungsmittel durch eine Sprachbedieneinrichtung verschiedene Bedienfunktionen zugewiesen werden, wobei das Betätigungsmittel über mehrere Verstellfreiheitsgrade verfügt, welche in Abhängigkeit von der zugewiesenen Bedienfunktion einstellbar sind. Zusätzlich kann ein.Benutzer eine haptische Rückmeldung über den eingestellten Wert und den Wertebereich der zugewiesenen Bedienfunktion erhalten, wobei die Art der haptischen Rückmeldung ebenfalls durch die zugewiesene Bedienfunktion eingestellt wird. Desweiteren besteht die Möglichkeit nur die Art der haptischen Rückmeldung durch die über die Sprachbedieneinrichtung zugewiesene Bedienfunktion einzustellen. Als zusätzliche Möglichkeit der Rückmeldung an den Benutzer können Sprachausgabemittel und/oder optische Anzeigemittel vorgesehen werden.

Führt man verschiedene Bedienfunktionen vollständig per Sprachbedienung aus, so zeigt sich, daß nicht alle analogen Stellfunktionen vorteilhaft per Sprache zu bedienen sind. Ein Beispiel hierfür ist die Lautstärkeregelung.
Man kann zwar sehr einfach die Lautstärke per Sprachbefehl "lauter", "leiser", "ganz laut" oder "ganz leise" einstellen, stößt aber spätestens dann auf Probleme, wenn größere Lautstärkebereiche durchfahren werden müssen. Es gibt zwar die Möglichkeit, obige Sprachbefehle mehrfach zu wiederholen, oder mehrfach den Sprachbefehl "weiter" zu sprechen, ganz so komfortabel wie ein analoger Drehsteller kann dieses System jedoch nicht sein. Der konsequente Einsatz von Drehstellern für diese Zwecke ist jedoch aufgrund häufig schon überladener Bedienfronten nicht mehr möglich.

Mit einem zentralen Betätigungsmittel, welchem per Sprachbefehl eine jeweils gewünschte Bedienfunktion zugewiesen werden kann, kann der Benutzer mit beliebiger Geschwindigkeit und Feinfühligkeit jede gewünschte Stellgröße dosieren und muß doch nur nach einem einzigen Knopf greifen. Eine Blickwendung ist nach kurzer Eingewöhnungsphase und bei ergonomisch sinnvoller Auslegung praktisch nicht notwendig. Über die Möglichkeiten der haptischen und/oder der akustischen und/oder der optischen Rückmeldung kann der Benutzer optimal über die gewählten Einstellungen informiert werden.

Zur Ausführung der zugewiesenen Bedienfunktionen kann das Betätigungsmittel über folgende Verstellfreiheitsgrade verfügen: Translation entlang der x-Achse (Schieben nach vorne bzw. hinten), entlang der y-Achse (Schieben nach rechts bzw. links) und entlang der z-Achse (Drücken nach unten bzw. ziehen nach oben) ; Drehung um die x-Achse (Kippen nach links bzw. rechts), um die y-Achse (Kippen nach vorne bzw. nach hinten) und um die z-Achse (Drehen nach links bzw. rechts).

Zudem kann das Betätigungsmittel über folgende Arten der haptischen Rückmeldung verfügen:
Anschlag (Begrenzung der Bewegung in jeder beliebigen Stellung), beispielsweise zur Vermittlung eines Funktionsmaximal- und/oder Funktionsminimalwertes bzw. eines spürbaren Druck- und/oder Zugpunktes, verschiedene frei wählbare Reibmomente, beispielsweise zur Vermittlung eines Funktionsmittelwertes, Simulation einer Rastung mit variablen Rastkräften, Raststellungen und Rastweiten, beispielsweise zur Vermittlung eines rastenden Inkrementalgebers und Rückstellung des Betätigungsmittels in eine Neutralposition entgegen der Kraft eines Benutzers, beispielsweise zur Vermittlung einer Joystickfunktion.

Alle für die zugewiesene Bedienfunktion nicht relevanten Verstellfreiheitsgrade und Arten der haptischen Rückmeldung werden durch entsprechende Mittel gesperrt, so kann der Benutzer allein aus den eingestellten Freiheitsgraden und Arten der haptischen Rückmeldung erkennen mit welcher Bedienfunktion das Betätigungsmittel im Augenblick belegt ist.

Die Erfindung wird im Folgenden anhand von Ausführungsbeispielen in Verbindung mit den Figuren der Zeichnung näher beschrieben.
Es zeigen:
Fig. 1: eine schematische Darstellung einer Ausführungsform des Bediensystems und
Fig. 2: eine schematische Darstellung einer Ausführungsform des Betätigungsmittels.

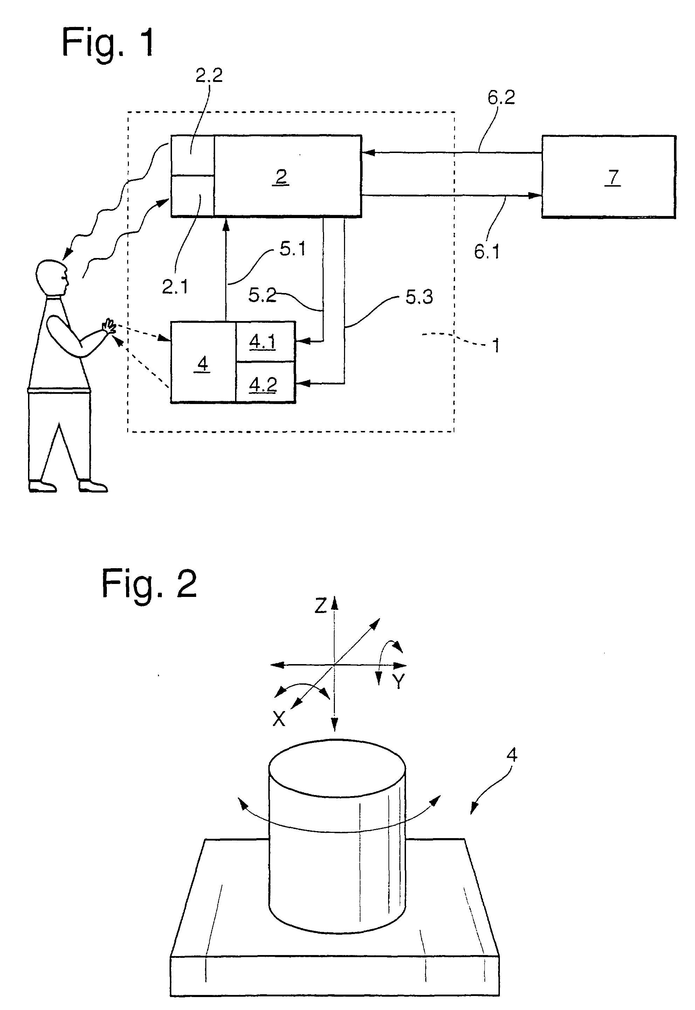

Die Fig. 1 zeigt eine schematische Darstellung einer ersten Ausführungsform des Bediensystems. Das dargestellte Bediensystem 1 umfaßt eine Sprachbedieneinrichtung 2 mit einem Spracheingabemittel 2.1 und einem Sprachausgabemittel 2.2, und ein Betätigungsmittel 4, welches über Mittel zum Einstellen von mindestens einem Verstellfreiheitsgrad 4.1 und über Mittel zum Einstellen von mindestens einer Art einer haptischen Rückmeldung 4.2 verfügt. Durch Drücken des Betätigungsmittels 4 (Translation in z-Richtung) wird die Sprachbedieneinrichtung 2 aktiviert und der Benutzer kann einen vordefinierten Sprachbefehl, welcher durch das Spracheingabemittel 2.1 in elektrische Signale umgewandelt wird, sprechen. Die Sprachbedieneinrichtung 2 interpretiert die dem Sprachbefehl des Benutzers entsprechenden elektrischen Signale so, daß das Betätigungsmittel 4 fortan und dauerhaft mit einer Bedienfunktion, welche dem Sprachbefehl des Benutzers zugeordnet ist, belegt ist. Drückt der Benutzer das Betätigungsmittel 4 erneut, und spricht er einen anderen Sprachbefehl, so steht ihm von diesem Zeitpunkt an eine andere Bedienfunktion am Betätigungsmittel 4 zur Verfügung. Entsprechend der ausgewählten Bedienfunktion sendet die Sprachbedieneinrichtung 2 über die elektrischen Verbindungen 5.2 und 5.3 Steuersignale an die Mittel zur Einstellung der Verstellfreiheitsgrade 4.1 und die Arten der haptischen Rückmeldung 4.2. Diese Mittel 4.1 und 4.2 sind beispielsweise als elektromechanische und/oder elektromagnetische Aktuatoren ausgeführt, mit welchen es möglich ist Kräfte auf das Betätigungsmittel 4 wirken zu lassen. Über die elektrische Verbindung 5.1 liefert das Betätigungsmittel 4 die erzeugten Stellsignale für die ausgewählte Bedienfunktion über die Sprachbedieneinrichtung 2 und über die elektrische Verbindung 6.1 an das entsprechende zu bedienende Gerät 7. Das zu bedienende Gerät 7 liefert über die elektrische Verbindung 6.2 bestimmte Signale (beispielsweise Signale von Sensoren oder Endschaltern) zurück an die Sprachbedieneinrichtung 2. Die Sprachbedieneinrichtung 2 liefert nach Auswertung dieser Signale die entsprechenden Steuersignale über die elektrischen Verbindungen 5.2 und 5.3 an das Betätigungsmittel 4, um die Einstellung der Verstellfreiheitsgrade und/oder der Arten der haptischen Rückmeldung wenn notwendig entsprechend zu verändern. Dabei können die elektrischen Verbindungen 5.1 bis 5.3 zwischen Sprachbedieneinrichtung 2 und Betätigungsmittel 4 sowie die elektrischen Verbindungen 6.1 und 6.2 zwischen der Sprachbedieneinrichtung 2 und den zu bedienenden Geräten 7 als Datenbus ausgeführt sein.

Die Fig. 2 zeigt eine schematische Darstellung einer vorteilhaften Ausgestaltung des Betätigungsmittels 4. Dabei können dem dargestellten Betätigungsmittel 4 die nachfolgend beschriebenen Bedienfunktionen mit den entsprechenden Verstellfreiheitsgraden und Arten der haptischen Rückmeldung zugewiesen werden.

Vermittlung des Funktionsmaximal- und Funktionsminimalwertes:

Vertreter dieser Bedienfunktion sind z. B. Lautstärke, Baß, Höhen, Balance, Gebläse usw.. Das Betätigungsmittel wird bei Erreichen des jeweiligen Endwertes für das Weiterdrehen in die entsprechende Richtung gesperrt.

Vermittlung des Funktionsmittelwertes, bzw. von Raststellen:

Funktionen wie Balance, Fader, Baß, Höhen und Gebläse besitzen einen wohldefinierten Mittelwert, über den der Benutzer häufig informiert sein möchte, ohne sich allein auf seine optische und/oder akustische Wahrnehmung verlassen zu müssen. Beim Erreichen des Mittelwertes wird das Weiterdrehen des Betätigungsmittels etwas erschwert, damit ist der Mittelwert erfühlbar. Auf die gleiche Art und Weise lassen sich auch Raststellen (Inkremente) fühlbar machen. Die Anzahl der Raststellen ist dabei von der Bedienfunktion abhängig.

Meldung der Mittel- und Endposition durch veränderte Krafteinleitung:

Bei der Verstellung von mechanischen Komponenten (Sitz, Spiegel, usw.) erkennt der Benutzer das Erreichen der Endposition meist nur auf optischem Wege (z. B. der Sitz bleibt stehen). Der Benutzer wird deshalb über die erreichte Endposition dadurch informiert, daß schlagartig eine erhöhte Rückstellkraft zur Wirkung kommt, oder daß eine Vibration auf das Betätigungselement wirkt. Läßt der Benutzer das Betätigungselement los, so geht es in die Mittelstellung zurück. Danach wird der entsprechende Verstellfreiheitsgrad gesperrt. Die Mittelposition ist oft Ausgangspunkt für eine endgültige Einstellung und noch schwieriger zu erkennen. Das Überfahren der Mittelposition könnte durch Einleiten eines kurzen Impulses angedeutet werden.

Alle für die zugewiesene Bedienfunktion nicht relevanten Verstellfreiheitsgrade und Arten der haptischen Rückmeldung lassen sich durch elektromagnetische und/oder elektromechanische Vorrichtungen sperren. So kann der Benutzer darüber informiert werden, welche Verstellfreiheitsgrade und Arten der haptischen Rückmeldung für die ausgewählte Bedienfunktion eingestellt sind (z. B. Spiegelverstellung über Drehbewegungen um die x- und y-Achse, Lautstärke über Drehbewegung um die z-Achse).

Zusätzliche Möglichkeiten für die Rückmeldung an den Benutzer ergeben sich, wenn das Bediensystem 4 um Sprachausgabemittel 2.2, beispielsweise ein Lautsprecher, und/oder um optische Anzeigemittel, beispielsweise Leuchtdioden und/oder ein Bildschirm, erweitert wird. Durch diese Mittel kann der Benutzer zusätzlich oder statt der haptischen Rückmeldung über die ausgewählten Bedienfunktionen und die entsprechenden eingestellten Funktionswerte informiert werden. Die Mittel eignen sich besonders zur Dialogführung in einem Kraftfahrzeug für eine Namensliste bei einem Telefon, die Temperatureinstellung einer Klimaanlage oder den Sendersuchlauf bei einem Radio.

Außer für die Anwendung in einem Kraftfahrzeug ist es vorstellbar, die Erfindung in anderen Bereichen, wie zum Beispiel zur Steuerung einer Werkzeugmaschine oder anderen komplexen Einrichtungen, zu verwenden, bei welchen es notwendig ist, den Benutzer so wenig wie möglich von Kontrollaufgaben abzulenken.

## Patentansprüche

1. Bediensystem, insbesondere für Komponenten in einem Kraftfahrzeug, umfassend eine Sprachbedieneinrichtung (2) und ein manuelles Betätigungsmittel (4), wobei dem manuellen Betätigungsmittel (4) durch die Sprachbedieneinrichtung (2) verschiedene Bedienfunktionen zugewiesen werden,
**dadurch gekennzeichnet,**
**dass** das manuelle Betätigungsmittel (4) über mehrere der Verstellfreiheitsgrade Translation entlang der x-Achse entlang der y-Achse entlang der z-Achse Drehung um die x-Achse um die y-Achse und um die z-Achse verfügt, welche in Abhängigkeit von der zugewiesenen Bedienfunktion am Betätigungsmittel (4) selbst gesperrt werden.

2. Bediensystem nach Anspruch 1,
**dadurch gekennzeichnet,**
**dass** das manuelle Betätigungsmittel über mehrere Arten einer haptischen Rückmeldung an den Benutzer verfügt, welche in Abhängigkeit von der zugewiesenen Bedienfunktion am Betätigungsmittel (4) selbst eingestellt und/oder gesperrt werden.

3. Bediensystem nach Anspruch 1 oder 2,
**dadurch gekennzeichnet,**
**dass** ein Sprachausgabemittel (2.2) vorgesehen ist, welches dem Benutzer eine akustische Rückmeldung in Abhängigkeit von der zugewiesenen Bedienfunktion gibt.

4. Bediensystem nach einem der Ansprüche 1 bis 3
**dadurch gekennzeichnet,**
**dass** mindestens ein optisches Anzeigemittel vorgesehen ist, welches dem Benutzer eine optische Rückmeldung in Abhängigkeit von der zugewiesenen Bedienfunktion gibt.

5. Bediensystem nach Anspruch 1 oder 2,
**dadurch gekennzeichnet,**
**dass** die Einstellung der Verstellfreiheitsgrade und/oder der Arten der haptischen Rückmeldung durch ein zu bedienendes Gerät (7) mittels bestimmter Signale über die Sprachbedieneinrichtung (2) veränderbar ist.

## Claims

1. An operating system, in particular for components in a motor vehicle, comprising a voice-activated operating device (2) and a manual actuating means (4), various operating functions being allocated to the manual actuating means (4) by means of the voice-activated operating device (2),
**characterised in that**
the manual actuating means (4) has several of the degrees of adjustment freedom translation along the x axis, along the y axis, along the z axis, rotation about the x axis, about the y axis, about the z axis which can be blocked at the actuating means (4) itself in dependence on the allocated operating function.

2. An operating system in accordance with Claim 1,
**characterised in that**
the manual actuating means has several kinds of haptic acknowledgement to the user which can be set and/or blocked at the actuating means (4) itself in dependence on the allocated operating function.

3. An operating system in accordance with Claim 1 or 2,
**characterised in that**
a voice output means (2.2) is provided which gives the user an acoustic acknowledgement dependent on the allocated operating function.

4. An operating system in accordance with one of Claims 1 to 3,
**characterised in that**
at least one optical indicating means is provided which gives the user an optical acknowledgement dependent on the allocated operating function.

5. An operating system in accordance with Claim 1 or 2,
**characterised in that**
the setting of the degree of adjustment freedom and/or the types of haptic acknowledgement can be changed by a device (7) to be operated by means of certain signals via the voice-activated operating device (2).

## Revendications

1. Système de commande, notamment pour des composants dans un véhicule automobile, comprenant un dispositif de commande vocale (2) et un moyen d'actionnement manuel (4), différentes fonctions de commande étant affectées au moyen d'actionnement manuel (4) par le dispositif de commande vocale (2), **caractérisé en ce que** le moyen d'actionnement manuel (4) dispose de plusieurs des degrés de liberté de réglage, à savoir translation le long de l'axe x, le long de l'axe y et le long de l'axe z, rotation autour de l'axe x, autour de l'axe y et autour de l'axe z, qui sont bloqués conformément à la fonction de commande associée sur le moyen d'actionnement (4) lui-même.

2. Système de commande selon la revendication 1, **caractérisé en ce que** le moyen d'actionnement manuel comporte plusieurs types d'une signalisation haptique en retour au niveau de l'utilisateur, qui sont réglés et/ou bloqués conformément à la fonction de commande associée au niveau du moyen d'actionnement (4) lui-même.

3. Système de commande selon la revendication 1 ou 2, **caractérisé en ce qu'**il est prévu un moyen de sortie vocale (2.2), qui délivre à l'utilisateur une signalisation acoustique en retour conformément à la fonction de commande associée.

4. Système de commande selon l'une des revendications 1 à 3, **caractérisé en ce qu'**il est prévu au moins un moyen d'affichage optique, qui envoie à l'utilisateur une signalisation optique en retour conformément à la fonction de commande associée.

5. Système de commande selon la revendication 1 ou 2, **caractérisé en ce que** le réglage des degrés de liberté de réglage et/ou les types de la signalisation haptique en retour peut être modifié par un appareil devant être commandé (7), au moyen de signaux déterminés, par l'intermédiaire du dispositif de commande vocale (2).
